# EUROPÄISCHE PATENTSCHRIFT

(11) **EP 4 110 845 B1**
(45) Veröffentlichungstag und Bekanntmachung des Hinweises auf die Patenterteilung: **04.09.2024**
(21) Anmeldenummer: 21705988.0
(22) Anmeldetag: 22.02.2021
(51) Int. Cl.: C08G 59/18, C08G 59/24, C08G 59/50

(54) **AMIN-EPOXIDHARZ-ADDUKT**
AMINE EPOXY RESIN ADDUCT
ADDUIT DE RÉSINE ÉPOXY-AMINE

(30) Priorität: 24.02.2020 EP 20158929
(43) Veröffentlichungstag der Anmeldung: 04.01.2023
(73) Patentinhaber: Sika Technology AG, 6340 Baar (CH)
(72) Erfinder: KASEMI, Edis, 8046 Zürich (CH); SARIOGLU, Oguz, 74080 Heilbronn (DE); BURCKHARDT, Urs, 8049 Zürich (CH); KRAMER, Andreas, 8008 Zürich (CH); STADELMANN, Ursula, 8046 Zürich (CH); GRÖTZINGER, Jochen, 73525 Schwäbisch Gmünd (DE); VON DER BRÜGGEN, Uwe, 74909 Meckesheim (DE)
(74) Vertreter: Sika Patent Attorneys
(86) Internationale Anmeldenummer: PCT/EP2021/054252
(87) Internationale Veröffentlichungsnummer: WO 2021/170511

(56) Entgegenhaltungen:
- WO-A1-2017/046293
- WO-A1-2018/166996

## Beschreibung

### Technisches Gebiet

Die Erfindung betrifft aminfunktionelle Addukte von Diaminen mit Diepoxiden und deren Verwendung als Härter für Epoxidharz-Zusammensetzungen, welche insbesondere geeignet sind als Bodenbeschichtung.

### Stand der Technik

Beschichtungen auf Epoxidharz-Basis sind im Bauwesen weit verbreitet. Sie bestehen aus flüssigen Harz- und Härterkomponenten, welche vor der Applikation gemischt werden und bei Umgebungstemperaturen im Bereich von etwa 5 bis 35 °C aushärten. Die Beschichtungen sollen bei der Applikation möglichst niedrigviskos sein, so dass sie bei Umgebungstemperatur gut verlaufen. Nach der Applikation sollen sie möglichst schnell und störungsfrei aushärten, auch bei feuchtkalten Bedingungen, und dabei eine fehlerfreie Oberfläche ohne Trübungen, Flecken, Klebrigkeit oder Krater ausbilden. Nach der Aushärtung sollen sie eine hohe Härte bei geringer Sprödigkeit und hoher Glasübergangstemperatur besitzen, um mechanischer Beanspruchung möglichst gut zu widerstehen. Für optisch anspruchsvolle Anwendungen, beispielsweise Deckbeläge von Fussböden, sollen sie zudem einen hohen Glanzgrad und eine möglichst geringe Neigung zum Vergilben unter Lichteinfluss aufweisen.

Oft haben solche Epoxidharz-Beschichtungen aber eine Neigung zu Oberflächenstörungen wie Trübungen, Flecken, Rauheit oder Klebrigkeit, was auch als "Blushing" bezeichnet wird. Blushing wird durch die Salzbildung der in der Härterkomponente enthaltenen Amine mit Kohlendioxid aus der Luft verursacht und tritt besonders bei hoher Luftfeuchtigkeit und tiefen Temperaturen auf. Viele Härter für Epoxidharz-Beschichtungen enthalten Addukte von Diaminen mit Epoxidharz. Dies vermindert die Blushing-Effekte und ermöglicht zudem eine schnellere Aushärtung. Diamin-Epoxidharz-Addukte sind aber deutlich höherviskos als die freien Diamine. Um die Viskosität einzugrenzen, wird das Diamin gegenüber dem Epoxidharz in einem hohen stöchiometrischen Überschuss eingesetzt. Je nach Stöchiometrie bzw. Höhe des Diamin-Überschusses bei der Herstellung der Addukte ist der Gehalt an nicht umgesetztem Diamin und die Verteilung der verschiedenen Addukt-Moleküle unterschiedlich. Addukte, welche mit einem geringen Diamin-Überschuss hergestellt wurden, enthalten weniger nicht umgesetztes Diamin und mehr höhermolekulare Addukt-Moleküle mit zwei, drei oder mehr Diepoxid-Einheiten. Solche Addukte wären an sich vorteilhaft. Sie sind geruchsarm, besonders wenig anfällig auf Blushing und ermöglichen, das Addukt in hoher Menge einzusetzen und/oder mit weiteren Aminen zu kombinieren. Mit geringem Diamin-Überschuss hergestellte Addukte sind aber sehr hochviskos oder gar fest, woduch sie bei Raumtemperatur nur mit erheblichen Mengen an Verdünnern wie Benzylalkohol handhabbar sind. Verdünner werden bei der Aushärtung nicht in die Harzmatrix eingebaut und können durch Verdampfungs- oder Diffusionsprozesse in die Umgebung freigesetzt werden. Heutzutage werden aber zunehmend emissionsarme Produkte gewünscht, die nach der Aushärtung einen geringen Gehalt an freisetzbaren Substanzen aufweisen. Für emissionsarme oder emissionsfreie Epoxidharz-Zusammensetzungen können Verdünner deshalb nur in geringer Menge oder gar nicht eingesetzt werden.

WO 2017/046293 offenbart Addukte von mittels Destillation gereinigtem N-Benzyl-1,2-propandiamin oder N-Benzyl-1,2-ethandiamin und Bisphenol A-Diglycidylether, welche Beschichtungen mit schönen Oberflächen ermöglichen. Diese Addukte sind mit hohem Diamin-Überschuss hergestellt, wodurch die Freiheit beim Kombinieren mit weiteren Aminen stark eingeschränkt ist.

Ebenfalls bekannt sind Addukte von alkylierten Diaminen mit Epoxiden als Bestandteil von Härtern für wässrige Epoxidharz-Produkte, beispielsweise aus EP 1,956,034. Die Addukte enthalten Polyether-Ketten und werden nach der Umsetzung mit unadduktierten Diaminen und hohen Mengen Wasser verdünnt.

WO2018/166996A1 offenbart ein Verfahren zur Herstellung eines Härters für Epoxidharze, in dem ein Amingemisch enthaltend ein Ausgangs-Amin und ein alkyliertes Amin mit einem Glycidylether umgesetzt wird.

### Darstellung der Erfindung

Aufgabe der vorliegenden Erfindung ist es daher, ein Diamin-Epoxidharz-Addukt zur Verfügung zu stellen, welches auch bei geringem Diamin-Überschuss bei der Herstellung ohne Zusatz von Verdünnern bei Raumtemperatur flüssig und möglichst niedrigviskos ist und bei seiner Verwendung als Härter für Epoxidharz-Beschichtungen eine gute Verarbeitbarkeit, eine schnelle Aushärtung und fehlerfreie, glänzende Oberflächen ermöglicht, auch bei feuchtkalten Bedingungen.

Diese Aufgabe wird mit dem Addukt wie in Anspruch 1 beschrieben gelöst. Es wird erhalten durch Umsetzung von einem Amingemisch enthaltend ein monoalkyliertes Diamin und ein dialkyliertes Diamin mit einem Diepoxid in einem stöchiometrischen Verhältnis von mindestens 1.2 mol monoalkyliertes Diamin auf 1 Mol-Equivalent Epoxidgruppen.

Das erfindungsgemässe Addukt ist trotz geringem Diamin-Überschuss bei Raumtemperatur flüssig und überraschend niedrigviskos. Bereits bei einem geringen Gehalt an dialkyliertem Diamin ist das Addukt massiv weniger viskos als ein entsprechendes Addukt, welches ohne Anwesenheit des dialkylierten Diamins hergestellt wurde. Beim Einsatz des Addukts als Härter für Epoxidharze werden überraschenderweise weder die Aushärtegeschwindigkeit noch die Endhärte durch das dialkylierte Diamin nennenswert nachteilig beeinflusst. Die massiv geringere Viskosität des Addukts ist sehr vorteilhaft und konnte aufgrund des Standes der Technik nicht erwartet werden.

Das erfindungsgemässe Addukt ist besonders kostengünstig, da es aus einem technisch einfach herstellbaren Amingemisch erhältlich ist.

Das erfindungsgemässe Addukt ermöglicht emissionsarme oder emissionsfreie Epoxidharz-Beschichtungen mit überraschend guter Verarbeitbarkeit bei überraschend schneller Aushärtung, welche über eine hohe Härte und geringe Neigung zum Vergilben verfügen und auch bei feuchtkalten Bedingungen kaum zu Blushing-bedingten Fehlern neigen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein aminfunktionelles Addukt aus der Umsetzung von
(i) einem Amingemisch enthaltend mindestens ein Diamin der Formel (I) und mindestens ein Diamin der Formel (II) in einem Gewichtsverhältnis im Bereich von 65/35 bis 95/5, 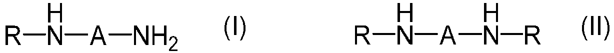 wobei
   A für einen Alkylenrest, Cycloalkylenrest oder Arylalkylenrest mit 2 bis 12 C-Atomen steht, und
   R für einen Alkylrest, Cycloalkylrest oder Arylalkylrest mit 1 bis 12 C-Atomen steht,
   wobei die beiden Stickstoffatome im Diamin der Formel (I) und (II) jeweils durch mindestens zwei C-Atome voneinander getrennt sind und das Diamin der Formel (I) insgesamt 8 bis 15 C-Atome aufweist,
(ii) mit mindestens einem Diepoxid
in einem stöchiometrischen Verhältnis von mindestens 1.2 mol Diamin der Formel (I) auf 1 Mol-Equivalent Epoxidgruppen.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet. Es wird angegeben in der Masseinheit "g/Eq".

Als "Epoxid-Equivalentgewicht" wird die Masse einer Epoxidgruppen-haltigen Verbindung oder Zusammensetzung bezeichnet, die ein Mol-Equivalent Epoxidgruppen enthält. Es wird angegeben in der Masseinheit "g/Eq".

Mit "Poly" beginnende Substanznamen wie Polyamin oder Polyepoxid bezeichnen Substanzen, die formal zwei oder mehr der in ihrem Namen vorkommenden funktionellen Gruppen pro Molekül enthalten.

Als "Verdünner" wird eine in einem Epoxidharz lösliche und dessen Viskosität senkende Substanz bezeichnet, welche bei der Aushärtung chemisch nicht in das Epoxidharz-Polymer eingebunden wird.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Gelierzeit" wird die Zeitspanne ab dem Mischen der Komponenten einer Epoxidharz-Zusammensetzung bis zu deren Gelieren bezeichnet.

Als "Raumtemperatur" wird eine Temperatur von 23 °C bezeichnet.

Das für das erfindungsgemässe Addukt eingesetzte Amingemisch enthält bevorzugt keine oder nur geringe Mengen an anderen, nicht der Formeln (I) und (II) entsprechenden, Aminen. Bevorzugt weist das Amingemisch eine Reinheit bezogen auf die Summe aus Diamin der Formel (I) und Diamin der Formel (II) von mindestens 95 Gewichts-%, insbesondere mindestens 97 Gewichts-%, auf.

Bevorzugt enthält das für die Herstellung des Addukts eingesetzte Amingemisch einen Gehalt an Diamin der Formel H₂N-A-NH₂, wobei A die bereits erwähnte Bedeutung aufweist, von höchstens 5 Gewichts-%, bevorzugt höchstens 3 Gewichts-%, besonders bevorzugt höchstens 2 Gewichts-%, insbesondere höchstens 1 Gewichts-%. Ein solches Amingemisch ist besonders geruchsarm und ermöglicht niedrigviskose Addukte, welche bei der Verwendung als Härter für Epoxidharze kaum Blushing verursachen.

Bevorzugt ist A ausgewählt aus der Gruppe bestehend aus 1,2-Ethylen, 1,2-Propylen, 1,3-Propylen, 1,4-Butylen, 1,3-Butylen, 2-Methyl-1,2-propylen, 1,3-Pentylen, 1,5-Pentylen, 2,2-Dimethyl-1,3-propylen, 1,6-Hexylen, 2-Methyl-1,5-pentylen, 1,7-Heptylen, 1,8-Octylen, 2,5-Dimethyl-1,6-hexylen, 1,9-Nonylene, 2,2(4),4-Trimethyl-1,6-hexylen, 1,10-Decylen, 1,11-Undecylen, 2-Butyl-2-ethyl-1,5-pentylen, 1,12-Dodecylen, 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, 1,3-Cyclohexylen-bis(methylen), 1,4-Cyclohexylen-bis(methylen), 1,3-Phenylen-bis(methylen) und 1,4-Phenylen-bis(methylen). Diese Diamine der Formel (I) und (II) sind abgeleitet von kommerziell gut verfügbaren primären Diaminen.

Insbesondere ist A ausgewählt aus der Gruppe bestehend aus 1,2-Ethylen, 1,2-Propylen, 2-Methyl-1,2-propylen, 1,3-Pentylen, 1,2-Cyclohexylen, 1,4-Cyclohexylen, 4(2)-Methyl-1,3-cyclohexylen, 1,3-Cyclohexylen-bis(methylen), 1,4-Cyclohexylen-bis(methylen), 1,3-Phenylen-bis(methylen) und 1,4-Phenylen-bis(methylen).

Am meisten bevorzugt steht A für 1,2-Ethylen. Diese Diamine der Formel (I) und (II) ermöglichen Addukte mit besonders niedriger Viskosität und besonders hoher Reaktivität und ermöglichen eine besonders geringe Neigung zum Vergilben.

Bevorzugt ist R ausgewählt aus der Gruppe bestehend aus Methyl, Ethyl, Propyl, Isopropyl, n-Butyl, Isobutyl, sec.Butyl, n-Pentyl, 3-Methyl-but-2-yl, Hexyl, 4-Methyl-pent-2-yl, 2-Ethylhexyl, Octyl, Nonyl, Decyl, Undecyl, Dodecyl und einem gegebenenfalls substituierten 1-Phenylethyl-, 2-Phenylethyl-, Benzyl-, Naphthylmethyl-, Cyclohexylmethyl- und 2-Cyclohexylethyl-Rest.

Bevorzugt sind Reste R mit 6 bis 12 C-Atomen, insbesondere 6 bis 8 C-Atomen.

Besonders bevorzugt ist R ausgewählt aus der Gruppe bestehend aus 2-Ethylhexyl, 2-Phenylethyl, Benzyl, 1-Naphthylmethyl und Cyclohexylmethyl.

Am meisten bevorzugt steht R für Benzyl. Diese Diamine der Formel (I) und (II) ermöglichen Addukte mit besonders niedriger Viskosität und hoher Reaktivität sowie besonders wenig Neigung zu Blushing-Effekten und Vergilben, insbesondere in Kombination mit Resten A, welche frei sind von aromatischen Gruppen.

Besonders bevorzugt ist das Diamin der Formel (I) ausgewählt aus der Gruppe bestehend aus N-Benzyl-1,2-ethandiamin, N-(1-Naphthylmethyl)-1,2-ethandiamin, N-Cyclohexylmethyl-1,2-ethandiamin, N-Benzyl-1,2-propandiamin und N-(2-Ethylhexyl)-bis(aminomethyl)-1,3-benzol.

Am meisten bevorzugt als Diamin der Formel (I) ist N-Benzyl-1 ,2-ethandiamin. Dieses Diamin ermöglicht besonders niedrigviskose und reaktive Addukte.

Bevorzugt stehen die Reste A und R in den Diaminen der Formel (I) und (II) für identische Reste. Ein solches Amingemisch ist besonders einfach verfügbar als Reaktionsprodukt einer Alkylierung.

Besonders bevorzugt steht das Diamin der Formel (I) für N-Benzyl-1 ,2-ethandiamin und das Diamin der Formel (II) für N,N'-Dibenzyl-1,2-ethandiamin.

Bevorzugt liegt das Gewichtsverhältnis zwischen dem Diamin der Formel (I) und dem Diamin der Formel (II) im Bereich von 70/30 bis 95/5, besonders bevorzugt 80/20 bis 90/10. Ein solches Addukt ist besonders reaktiv und ermöglicht hohe Härten.

Das Diamin der Formel (I) und das Diamin der Formel (II) werden bevorzugt mittels partieller Alkylierung von mindestens einem Amin der Formel H₂N-A-NH₂ mit mindestens einem Alkylierungsmittel hergestellt.

Bevorzugt ist die Alkylierung eine reduktive Alkylierung, wobei als Alkylierungsmittel ein Aldehyd oder Keton und Wasserstoff eingesetzt wird.

Bevorzugt wird die reduktive Alkylierung in Anwesenheit eines geeigneten Katalysators durchgeführt. Als Katalysator bevorzugt sind Palladium auf Kohle (Pd/C), Platin auf Kohle (Pt/C), Adams-Katalysator oder Raney-Nickel, insbesondere Palladium auf Kohle oder Raney-Nickel.

Bei Verwendung von molekularem Wasserstoff wird die reduktive Alkylierung bevorzugt in einer Druckapparatur bei einem Wasserstoff-Druck von 5 bis 150 bar, insbesondere 10 bis 100 bar, gearbeitet. Dies kann in einem Batch-Prozess oder bevorzugt in einem kontinuierlichen Prozess erfolgen.

Die reduktive Alkylierung wird bevorzugt bei einer Temperatur im Bereich von 40 bis 120 °C, insbesondere 60 bis 100 °C, durchgeführt.

Im Fall von kleinen flüchtigen Aminen, wie insbesondere 1,2-Ethandiamin oder 1,2-Propandiamin, wird dieses bevorzugt im stöchiometrischen Überschuss gegenüber dem Aldehyd oder Keton eingesetzt und nach der Alkylierung nicht umgesetztes Amin teilweise oder vollständig aus der Reaktionsmischung entfernt, insbesondere mittels Destillation oder Stripping.

Für den Fall, dass A und R in den Diaminen der Formel (I) und (II) für identische Reste stehen, kann das erhaltene Reaktionsprodukt ohne weitere Aufreinigung als Amingemisch eingesetzt werden.

Das Diamin der Formel (I) und das Diamin der Formel (II) können aber auch jeweils separat hergestellt und zum Amingemisch vermischt werden. Dafür wird die Reaktionsmischung aus der reduktiven Alkylierung bevorzugt weiter gereinigt, insbesondere durch Destillation.

Bevorzugt wird die Reaktionsmischung nicht weiter gereinigt, sondern enthält das Diamin der Formel (I) und das Diamin der Formel (II) im erfindungsgemässen Verhältnis. Eine solche Reaktionsmischung ist besonders kostengünstig.

Bevorzugt ist das Amingemisch enthaltend mindestens ein Diamin der Formel (I) und mindestens ein Diamin der Formel (II) ein Reaktionsprodukt aus der reduktiven Alkylierung von mindestens einem Amin der Formel H₂N-A-NH₂ mit mindestens einem Aldehyd oder Keton und Wasserstoff.

Bevorzugt als Aldehyd oder Keton ist Formaldehyd, Acetaldehyd, 1-Propanal, Aceton, 1-Butanal, Isobutyraldhehyd, Methylethylketon, 1-Pentanal, Methylisopropylketon, 1-Hexanal, Methylisobutylketon, 2-Ethylhexanal, 1-Octanal, 1-Nonanal, 1-Decanal, 1-Undecanal, 1-Dodecanal, Methylphenylketon, Benzaldehyd, 1-Naphthaldehyd oder Cyclohexancarbaldehyd.

Besonders bevorzugt ist 2-Ethylhexanal, Benzaldehyd, 1-Naphthaldehyd oder Cyclohexancarbaldehyd, insbesondere Benzaldehyd.

Besonders bevorzugt als Amin der Formel H₂N-A-NH₂ ist 1,2-Ethandiamin.

Das Diepoxid ist bevorzugt ein aromatisches Diepoxid. Als "aromatisch" wird ein Diepoxid bezeichnet, welches mindestens einen aromatischen Ring enthält.

Das aromatische Diepoxid ist bevorzugt frei von Polyether-Ketten. Ein solches aromatisches Diepoxid ist besonders geeignet als Härter für nicht-wässrige Epoxidharz-Produkte, welche besonders stabil gegenüber Witterungseinflüssen sind.

Bevorzugt ist das Diepoxid ausgewählt aus der Gruppe bestehend aus Bisphenol A-Diglycidylether, Bisphenol F-Diglycidylether, Mischungen von Bisphenol A- und Bisphenol F-Diglycidylether, Brenzcatechin-Diglycidylether, Resorcinol-Diglycidylether, Hydrochinon-Diglycidylether, Bis(4-hydroxy-3-methylphenyl)methan-Diglycidylether, 2,2-Bis(4-hydroxy-3-methylphenyl)propan-Diglycidylether, Bis(3,5-dimethyl-4-hydroxyphenyl)methan-Diglycidylether, 2,2-Bis(3,5-dimethyl-4-hydroxyphenyl)propan-Diglycidylether, 2,2-Bis(4-hydroxy-3-tert.butylphenyl)propan-Diglycidylether, 2,2-Bis(4-hydroxyphenyl)butan-Diglycidylether, 3,3-Bis(4-hydroxyphenyl)pentan-Diglycidylether, 3,4-Bis(4-hydroxyphenyl)hexan-Diglycidylether, 4,4-Bis(4-hydroxyphenyl)heptan-Diglycidylether, 2,4-Bis(4-hydroxyphenyl)-2-methylbutan-Diglycidylether und 4,4'-Dihydroxybiphenyl-Diglycidylether.

Besonders bevorzugt ist das Diepoxid ein Bisphenol A-Diglycidylether, Bisphenol F-Diglycidylether oder Bisphenol A/F-Diglycidylether, insbesondere ein Bisphenol A-Diglycidylether.

Die Diglycidylether werden bevorzugt in einer technischen Qualität eingesetzt. Besonders bevorzugt sind kommerziell verfügbare Flüssigharze, wie insbesondere Araldite^{®} GY 240, Araldite^{®} GY 250, Araldite^{®} GY 281, Araldite^{®} GY 282, Araldite^{®} GY 285, Araldite^{®} PY 304 oder Araldite^{®} PY 720 (alle von Huntsman), oder D.E.R.^{®} 330, D.E.R.^{®} 331, D.E.R.^{®} 332, D.E.R.^{®} 336, D.E.R.^{®} 351, D.E.R.^{®} 352, D.E.R.^{®} 354 oder D.E.R.^{®} 356 (alle von Dow).

Bevorzugt weist das Diepoxid ein Epoxid-Equivalentgewicht im Bereich von 110 bis 260 g/Eq, bevorzugt 156 bis 200 g/Eq, auf.

Das Amingemisch wird wird bei der Umsetzung zum erfindungsgemässen Addukt bevorzugt in einer solchen Menge eingesetzt, dass das stöchiometrische Verhältnis im Bereich von 1.3 bis 2, insbesondere 1.4 bis 1.7, mol Diamin der Formel (I) auf 1 Mol-Equivalent Epoxidgruppen des Diepoxids liegt.

Ein solches Addukt enthält besonders wenig nicht umgesetzte Diamine und einen hohen Gehalt an Addukt-Molekülen. Es ist besonders geruchsarm und dabei überraschend niedrigviskos. Es ermöglicht eine besonders schnelle Aushärtung und einen grossen Spielraum bei der Kombination mit weiteren Aminen.

Bevorzugt liegt die Temperatur bei der Umsetzung im Bereich von 40 bis 120 °C, insbesondere 60 bis 100 °C.

Nach der Umsetzung wird nicht umgesetztes Diamin der Formel (I) und Diamin der Formel (II) bevorzugt nicht aus dem Addukt entfernt, sondern verbleibt in diesem und ist ein Bestandteil des Adduktes.

Das Addukt enthält sogenannte 2:1 Addukte aus der Addition von 2 mol Diamin der Formel (I) oder (II) und 1 mol Diepoxid. Im Fall von N-Benzyl-1,2-ethandiamin als Diamin der Formel (I), N,N'-Dibenzyl-1,2-ethandiamin als Diamin der Formel (II) und Bisphenol A-Diglycidylether enthält das Addukt hauptsächlich das folgende 2:1 Addukt, 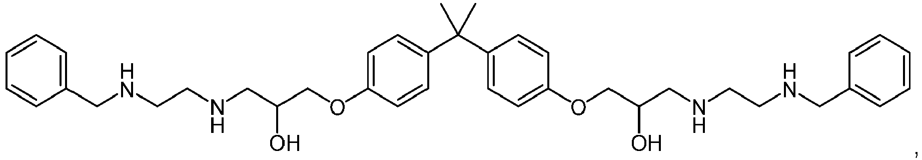 wobei als weitere 2:1 Addukte auch solche mit an Epoxidgruppen addierte sekundären Aminogruppen vorhanden sind, wie beispielsweise die Folgenden 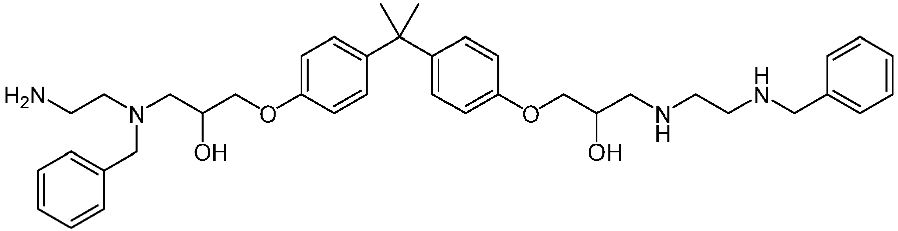 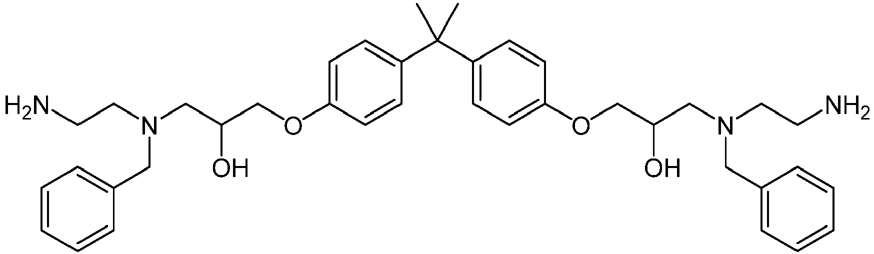 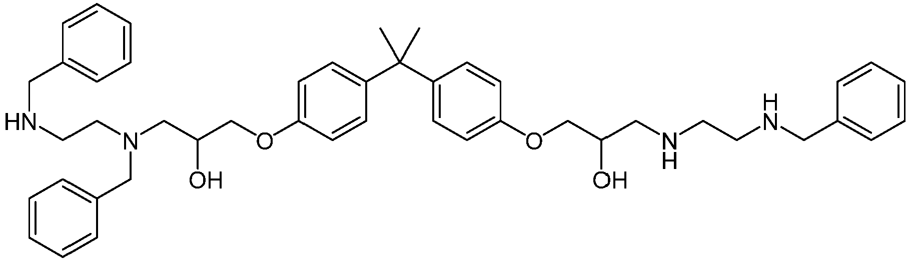 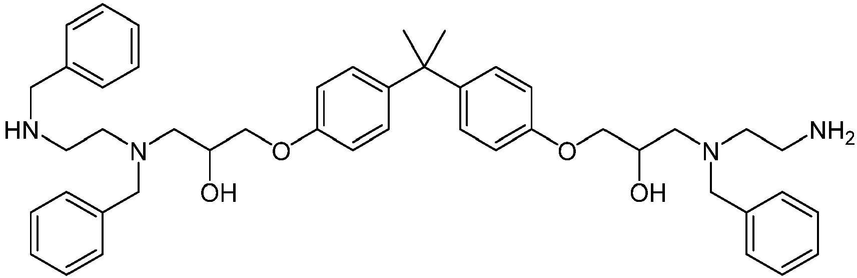 oder

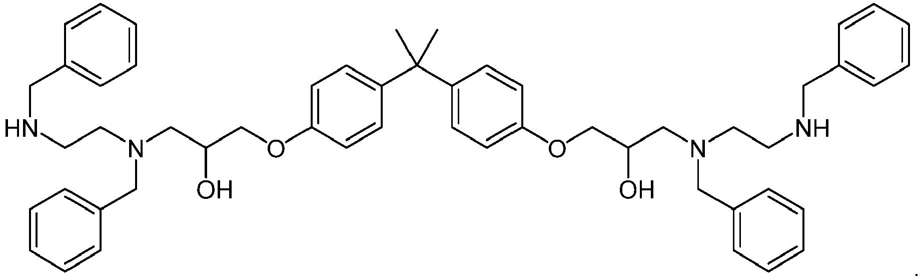

Weiterhin enthält das Addukt höhere Addukte, insbesondere sogenannte 3:2 Addukte aus der Addition von 3 mol Diamin der Formel (I) oder (II) und 2 mol Diepoxid. Im Fall von N-Benzyl-1,2-ethandiamin als Diamin der Formel (I) und Bisphenol A-Diglycidylether hauptsächlich das folgende 3:2 Addukt 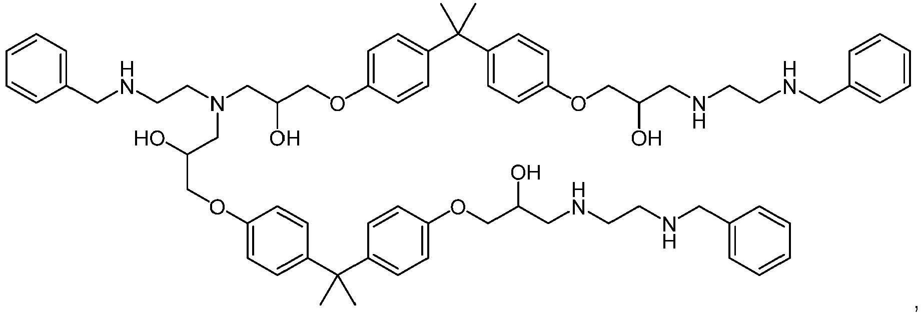 wobei auch 3:2 Addukte aus der Reaktion mit sekundären Aminogruppen vorhanden sind.

Weiterhin enthält das Addukt weitere höhere Addukte, sogenannte >3:2 Addukte, insbesondere solche aus der Addition von 4 mol Diamin der Formel (I) oder (II) und 3 mol Diepoxid bzw. 5 mol Diamin der Formel (I) oder (II) und 4 mol Diepoxid.

Bevorzugt enthält das erfindungsgemässe Addukt 2:1 Addukte und höhere Addukte in einem Gewichtsverhältnis im Bereich von 30/70 bis 80/20, bevorzugt 35/65 bis 70/30. Ein solches Addukt ermöglicht eine besonders vorteilhafte Kombination aus niedriger Viskosität und schneller Aushärtung.

Besonders bevorzugt enthält das erfindungsgemässe Addukt 2:1 Addukte und höhere Addukte in einem Gewichtsverhältnis im Bereich von 30/70 bis 49.9/50.1, insbesondere 35/65 bis 49/51. Ein solches Addukt ist insbesondere hergestellt in einem stöchiometrischen Verhältnis im Bereich von 1.4 bis 1.7 mol Diamin der Formel (I) auf 1 Mol-Equivalent Epoxidgruppen des Diepoxids. Es ermöglicht eine besonders schnelle Aushärtung.

Bevorzugt enthält das Addukt weniger als 1 Gewichts-% Verdünner oder Wasser.

Bevorzugt hat das Addukt eine Viskosität bei 20 °C im Bereich von 5 bis 500 Pa s, bevorzugt 10 bis 250 Pa s, insbesondere 20 bis 150 Pa s, gemessen mittels Kegel-Platten Viskosimeter bei einer Schergeschwindigkeit von 10 s⁻¹.

Das erfindungsgemässe Addukt ist besonders geeignet zum Aushärten eines Epoxidharzes.

Ein weiterer Gegenstand der Erfindung ist ein Härter für Epoxidharze, umfassend das erfindungsgemässe Addukt und mindestens einen weiteren Bestandteil ausgewählt aus der Gruppe bestehend aus weiteren Aminen, Beschleunigern und Verdünnern.

Der Härter enthält bevorzugt 1 bis 80 Gewichts-%, bevorzugt 2 bis 60 Gewichts-%, insbesondere 5 bis 50 Gewichts-%, des erfindungsgemässen Addukts.

Der Härter für Epoxidharze ist bevorzugt nicht wasserbasiert. Er enthält insbesondere weniger als 15 Gewichts-%, bevorzugt weniger als 10 Gewichts-%, Wasser. Ein solcher Härter ist geeignet für nicht-wässrige Epoxidharz-Produkte, insbesondere Bodenbeschichtungen.

Bevorzugt enthält der Härter mindestens ein weiteres Amin mit aliphatischen Aminogruppen und mindestens drei Aminwasserstoffen. Dieses weitere Amin wird bevorzugt erst nach erfolgter Umsetzung des Amingemisches mit dem Diepoxid zum Addukt zugemischt. Dabei kann es sich bei diesem weiteren Amin um das gleiche Amin handeln wie jenes, welches in der Umsetzung zum Addukt als Diamin der Formel (I) eingesetzt wurde, oder um ein anderes Amin.

Als weiteres Amin geeignet sind insbesondere N-Benzyl-1,2-ethandiamin, N-Benzyl-1,2-propandiamin, N-Benzyl-bis(aminomethyl)-1,3-benzol, N-(2-Ethylhexyl)-bis(aminomethyl)-1,3-benzol oder N-(2-Phenylethyl)-bis(aminomethyl)-1,3-benzol, sowie weiterhin 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethyl-1,6-hexandiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)-methan, 1-Amino-3-aminomethyl-3,5,5-trimethylcyclohexan (IPDA), 2(4)-Methyl-1,3-diaminocyclohexan, 2,5(2,6)-Bis(aminomethyl)bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA), 1,4-Bis(aminomethyl)benzol, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, Polyoxyalkylendi- oder -triamine, insbesondere Polyoxypropylendiamine oder Polyoxypropylentriamine wie Jeffamine^{®} D-230, Jeffamine^{®} D-400 oder Jeffamine^{®} T-403 (alle von Huntsman), Diethylentriamin (DETA), Triethylentetramin (TETA), Tetraethylenpentamin (TEPA), Pentaethylenhexamin (PEHA), Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin, 3-(2-Aminoethyl)aminopropylamin, Bis(hexamethylen)triamin (BHMT), N-Aminoethylpiperazin, 3-Dimethylaminopropylamin (DMAPA) oder 3-(3-(Dimethylamino)propylamino)propylamin (DMAPAPA).

Es kann vorteilhaft sein, wenn der erfindungsgemässe Härter eine Kombination aus zwei oder mehr weiteren Aminen enthält.

Bevorzugt sind weitere Amine ausgewählt aus der Gruppe bestehend aus N-Benzyl-1,2-ethandiamin, N-Benzyl-1,2-propandiamin, N-Benzyl-bis(aminomethyl)-1,3-benzol, N-(2-Ethylhexyl)-bis(aminomethyl)-1,3-benzol, N-(2-Phenylethyl)-bis-(aminomethyl)-1,3-benzol, TMD, 1,2-Diaminocyclohexan, 1,3-Diaminocyclohexan, 1,4-Diaminocyclohexan, 1,3-Bis(aminomethyl)cyclohexan, 1,4-Bis(aminomethyl)-cyclohexan, Bis(4-aminocyclohexyl)methan, IPDA, 2(4)-Methyl-1,3-diaminocyclohexan, MXDA, Polyoxypropylendiaminen mit einem mittlerem Molekulargewicht Mₙ im Bereich von 200 bis 500 g/mol, Polyoxypropylentriaminen mit einem mittlerem Molekulargewicht Mₙ im Bereich von 300 bis 500 g/mol, DMAPAPA, BHMT, DETA, TETA, TEPA, PEHA, DPTA, N3-Amin und N4-Amin.

Besonders bevorzugt enthält der Härter mindestens ein weiteres Amin ausgewählt aus der Gruppe bestehend aus N-Benzyl-1,2-ethandiamin, TMD, 1,2-Diaminocyclohexan, 1,3-Bis(aminomethyl)cyclohexan, 1,4-Bis(aminomethyl)cyclohexan, IPDA, 2(4)-Methyl-1,3-diaminocyclohexan, MXDA, Polyoxypropylendiaminen mit einem mittlerem Molekulargewicht Mₙ im Bereich von 200 bis 500 g/mol und Polyoxypropylentriaminen mit einem mittlerem Molekulargewicht Mₙ im Bereich von 300 bis 500 g/mol.

Als weiteres Amin besonders bevorzugt ist N-Benzyl-1,2-ethandiamin. Dieses Amin ermöglicht Härter mit besonders guter Verarbeitbarkeit, schneller Aushärtung und wenig Neigung zu Blushing-Effekten.

Als weiteres Amin besonders bevorzugt ist weiterhin MXDA, gegebenenfalls in Form eines aminfunktionellen Addukts mit einem Epoxidharz. Dieses Amin ermöglicht eine besonders schnelle Aushärtung.

Als weiteres Amin besonders bevorzugt ist weiterhin IPDA, gegebenenfalls in Form eines aminfunktionellen Addukts mit einem Epoxidharz. Dieses Amin ermöglicht eine besonders hohe Glasübergangstemperatur und Endhärte.

Geeignete Beschleuniger sind insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; Nitrate wie insbesondere Calciumnitrat; tertiäre Amine wie insbesondere 1,4-Diazabicyclo[2.2.2]octan, Benzyldimethylamin, α-Methylbenzyldimethylamin, Triethanolamin, Dimethylaminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo[5.4.0]-undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen.

Bevorzugt sind Säuren, Nitrate, tertiäre Amine oder Mannich-Basen, insbesondere Salicylsäure, Calciumnitrat oder 2,4,6-Tris(dimethylaminomethyl)phenol, oder eine Kombination dieser Beschleuniger.

Geeignete Verdünner sind insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, Cardanol (aus Cashewschalen-Öl, enthaltend als Hauptbestandteil 3-(8,11-Pentadecadienyl)phenol), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Bevorzugt sind Verdünner mit einem Siedepunkt von mehr als 200 °C.

Bevorzugt ist der Verdünner ausgewählt aus der Gruppe bestehend aus Benzylalkohol, styrolisiertem Phenol, ethoxyliertem Phenol, phenolgruppenhaltigen aromatischen Kohlenwasserstoffharzen, insbesondere den Novares^{®}-Typen LS 500, LX 200, LA 300 oder LA 700 (von Rütgers), Diisopropylnaphthalin und Cardanol. Besonders bevorzugt ist Benzylalkohol.

Phenolgruppen-haltige Verdünner zeigen auch eine Wirkung als Beschleuniger.

Der Härter kann weitere Bestandteile enthalten, insbesondere die Folgenden:
- weitere Addukte, insbesondere Addukte von IPDA, MXDA, DETA, TETA oder TEPA mit Bisphenol A-, F- oder A/F-Diglycidylethern, oder Addukte von MPMD oder 1,2-Ethandiamin oder 1,2-Propandiamin mit Kresylglycidylether, bei welchen nicht umgesetztes MPMD, 1,2-Ethandiamin oder 1,2-Propandiamin nach der Umsetzung destillativ entfernt wurde;
- Monoamine wie insbesondere Benzylamin oder Furfurylamin;
- Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten Polyamin, insbesondere DETA oder TETA;
- Mannich-Basen, insbesondere Phenalkamine, also Umsetzungsprodukte von Phenolen, insbesondere Cardanol, mit Aldehyden, insbesondere Formaldehyd, und Polyaminen;
- aromatische Polyamine wie insbesondere 4,4'-, 2,4' und/oder 2,2'-Diaminodiphenylmethan, 2,4- und/oder 2,6-Toluylendiamin, 3,5-Dimethylthio-2,4- und/oder -2,6-toluylendiamin, 3,5-Diethyl-2,4- und/oder -2,6-toluylendiamin;
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol.

Ein weiterer Gegenstand der vorliegenden Erfindung ist eine Epoxidharz-Zusammensetzung umfassend
- eine Harz-Komponente enthaltend mindestens ein Epoxidharz und
- eine Härter-Komponente umfassend das erfindungsgemässe Addukt.

Bevorzugt umfasst die Härter-Komponente den vorgängig beschriebenen Härter.

Ein geeignetes Epoxidharz wird auf bekannte Art und Weise erhalten, insbesondere aus der Reaktion von Epichlorhydrin mit Polyolen, Polyphenolen oder Aminen.

Geeignete Epoxidharze sind insbesondere aromatische Epoxidharze, insbesondere die Glycidylether von:
- Bisphenol A, Bisphenol F oder Bisphenol A/F, wobei A für Aceton und F für Formaldehyd steht, welche als Edukte zur Herstellung dieser Bisphenole dienten. Im Fall von Bisphenol F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzcatechin;
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)-heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]-benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxy-naphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.

Bevorzugt ist das Epoxidharz ein Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25°C bezeichnet.

Gegebenenfalls enthält die Harz-Komponente zusätzlich Anteile von Epoxid-Festharz.

Das Epoxidharz ist insbesondere ein Flüssigharz auf der Basis eines Bisphenols, insbesondere ein Bisphenol-A Diglycidylether und/oder Bisphenol-F-Diglycidylether, wie sie kommerziell beispielsweise von Olin, Huntsman oder Momentive erhältlich sind. Diese Flüssigharze weisen eine für Epoxidharze niedrige Viskosität auf und ermöglichen eine schnelle Aushärtung und hohe Härten. Sie können Anteile von Bisphenol A-Festharz oder Novolak-Glycidylethern enthalten.

Die Harz-Komponente kann einen Reaktivverdünner enthalten.

Als Reaktivverdünner bevorzugt sind Epoxidgruppen-haltige Reaktivverdünner, insbesondere Butandioldiglycidylether, Hexandioldiglycidylether, Trimethylolpropandi- oder triglycidylether, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃-bis C₁₅-Alkylglycidylether.

Bevorzugt enthält die Epoxidharz-Zusammensetzung mindestens einen weiteren Bestandteil ausgewählt aus der Gruppe bestehend aus Verdünnern, Beschleunigern und Füllstoffen.

Als Beschleuniger geeignet sind die bereits genannten, insbesondere Salicylsäure, Calciumnitrat oder 2,4,6-Tris(dimethylaminomethyl)phenol oder eine Kombination davon.

Als Verdünner geeignet sind die bereits genannten, insbesondere solche mit einem Siedepunkt von mehr als 200°C.

Bevorzugt ist der Verdünner ausgewählt aus der Gruppe bestehend aus Benzylalkohol, styrolisiertem Phenol, ethoxyliertem Phenol, phenolgruppenhaltigen aromatischen Kohlenwasserstoffharzen, insbesondere den Novares^{®}-Typen LS 500, LX 200, LA 300 oder LA 700 (von Rütgers), Diisopropylnaphthalin und Cardanol. Besonders bevorzugt ist Benzylalkohol.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln.

Bevorzugt ist Calciumcarbonat, Quarzmehl, Quarzsand oder eine Kombination davon.

Gegebenenfalls enthält die Epoxidharz-Zusammensetzung weitere Hilfs- und Zusatzstoffe, insbesondere die Folgenden:
- Reaktivverdünner, insbesondere die bereits vorgängig erwähnten, oder epoxidiertes Sojaöl oder Leinöl, Acetoacetatgruppen aufweisende Verbindungen, insbesondere acetoacetylierte Polyole, Butyrolakton, Carbonate, Aldehyde, Isocyanate oder Reaktivgruppen aufweisende Silikone;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid, Eisenoxide oder Chrom(III)oxid;
- Rheologie-Modifizierer, insbesondere Verdicker oder Antiabsetzmittel;
- Haftverbesserer, insbesondere Organoalkoxysilane;
- flammhemmende Substanzen, insbesondere die bereits genannten Füllstoffe Aluminiumhydroxid oder Magnesiumhydroxid, Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)-phosphat, Tris(dichloroisopropyl)phosphat, Tris[3-bromo-2,2-bis(bromomethyl)-propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine; oder
- Additive, insbesondere dispergiertes Paraffinwachs, Filmbildehilfsmittel, Netzmittel, Verlaufmittel, Entschäumer, Entlüfter, Stabilisatoren gegen Oxidation, Wärme, Licht oder UV-Strahlung oder Biozide.

Bevorzugt enthält die Epoxidharz-Zusammensetzung weitere Hilfs- und Zusatzstoffe, insbesondere Pigmente, Netzmittel, Verlaufsmittel und/oder Entschäumer.

Bevorzugt enthält die Epoxidharz-Zusammensetzung nur einen geringen Gehalt an Verdünnern. Bevorzugt enthält sie weniger als 20 Gewichts-%, besonders bevorzugt weniger als 15 Gewichts-%, insbesondere weniger als 10 Gewichts-%, Verdünner. Dies ermöglicht emissionsarme oder emissionsfreie Epoxidharz-Produkte.

Bevorzugt enthält die Epoxidharz-Zusammensetzung nur einen geringen Gehalt an Wasser, bevorzugt weniger als 5 Gewichts-%, insbesondere weniger als 1 Gewichts-%, Wasser.

In der Epoxidharz-Zusammensetzung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.

Die in der Epoxidharz-Zusammensetzung vorhandenen primären und sekundären Aminogruppen und gegebenenfalls vorhandene weitere gegenüber Epoxidgruppen reaktive Gruppen reagieren mit den Epoxidgruppen unter deren Ringöffnung (Additionsreaktion). Als Ergebnis hauptsächlich dieser Reaktion polymerisiert die Zusammensetzung und härtet dadurch aus.

Die Harz- und die Härter-Komponente der Epoxidharz-Zusammensetzung werden in voneinander getrennten Gebinden gelagert. Weitere Bestandteile der Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ebenfalls möglich ist, dass weitere Bestandteile als eigene, weitere Komponente vorhanden sind.

Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern. Zur Anwendung der Epoxidharz-Zusammensetzung werden die Komponenten kurz vor oder während der Applikation miteinander vermischt. Das Mischungsverhältnis zwischen der Harz- und der Härter-Komponente wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1.

Die Vermischung der Komponenten erfolgt mittels eines geeigneten Verfahrens; sie kann kontinuierlich oder batchweise erfolgen. Falls das Vermischen nicht unmittelbar vor der Applikation erfolgt, muss darauf geachtet werden, dass zwischen dem Vermischen der Komponenten und der Applikation nicht zu viel Zeit vergeht und die Applikation innerhalb der Topfzeit erfolgt. Die Vermischung erfolgt insbesondere bei Umgebungstemperatur, welche typischerweise im Bereich von etwa 5 bis 40°C, bevorzugt bei etwa 10 bis 35°C, liegt.

Mit dem Vermischen der beiden Komponenten beginnt die Aushärtung durch chemische Reaktion, wie vorgängig beschrieben. Die Aushärtung erfolgt typischerweise bei einer Temperatur im Bereich von 0 bis 150°C. Bevorzugt erfolgt sie bei Umgebungstemperatur und erstreckt sich typischerweise über einige Tage bis Wochen. Die Dauer hängt unter anderem von der Temperatur, der Reaktivität der Bestandteile und deren Stöchiometrie sowie der Gegenwart von Beschleunigern ab.

Im frisch vermischten Zustand hat die Epoxidharz-Zusammensetzung eine niedrige Viskosität. Bevorzugt liegt die Viskosität 10 Minuten nach dem Vermischen der Harz- und der Härter-Komponente bei 20 °C im Bereich von 300 bis 4'000 mPa·s, bevorzugt 300 bis 3'000 mPa·s, insbesondere 300 bis bis 2'000 mPa·s, gemessen mittels Kegel-Platten Viskosimeter bei einer Schergeschwindigkeit von 10 s⁻¹.

Die Applikation der Epoxidharz-Zusammensetzung erfolgt auf mindestens ein Substrat, wobei die Folgenden besonders geeignet sind:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke, insbesondere beschichtete Böden, welche mit einer weiteren Bodenbelagsschicht überschichtet werden.

Die Substrate können bei Bedarf vor dem Applizieren vorbehandelt werden, insbesondere durch physikalische und/oder chemische Reinigungsverfahren oder das Aufbringen eines Aktivators oder eines Primers.

Aus der Aushärtung der Epoxidharz-Zusammensetzung wird eine ausgehärtete Zusammensetzung erhalten.

Die Epoxidharz-Zusammensetzung wird bevorzugt verwendet als Beschichtung, Primer, Klebstoff, Dichtstoff, Vergussmasse, Giessharz, Imprägnierharz oder als Matrix für Faserverbundwerkstoffe (Composites) wie insbesondere CFK oder GFK.

Besonders bevorzugt wird die Epoxidharz-Zusammensetzung als Beschichtung verwendet. Als Beschichtung werden dabei flächig aufgebrachte Beläge aller Art verstanden, insbesondere Bodenbeläge, Anstriche, Lacke, Versiegelungen, Grundierungen, Primer oder Schutzbeschichtungen, insbesondere auch solche für schweren Korrosionsschutz.

Besonders geeignet ist die Epoxidharz-Zusammensetzung als Bodenbelag oder Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden, oder als Voranstrich, Haftanstrich, Korrosionsschutz-Primer oder zur Hydrophobierung von Oberflächen.

Besonders vorteilhaft wird die Epoxidharz-Zusammensetzung in emissionsarmen Beschichtungen mit Öko-Gütesiegeln, beispielsweise nach Emicode (EC1 Plus), AgBB, DIBt, Der Blaue Engel, AFSSET, RTS (M1) und US Green Building Council (LEED), verwendet.

Für die Verwendung als Beschichtung weist die Epoxidharz-Zusammensetzung vorteilhaft eine flüssige Konsistenz mit niedriger Viskosität und guten Verlaufseigenschaften auf. Die vermischte Zusammensetzung wird innerhalb der Topfzeit typischerweise flächig als dünner Film mit einer Schichtdicke von etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder einer Zahntraufel. Die Applikation kann auch mit einem Pinsel oder Roller oder als Spritzapplikation erfolgen, beispielsweise als Korrosionsschutzbeschichtung auf Stahl. Bei der Aushärtung entstehen typischerweise weitgehend homogene, glänzende und nichtklebrige Filme von hoher Härte, welche eine gute Haftung zu verschiedensten Substraten aufweisen.

Dabei wird die Epoxidharz-Zusammensetzung insbesondere in einem Verfahren zum Beschichten eingesetzt, umfassend die Schritte
(i) Vermischen der Komponenten der Epoxidharz-Zusammensetzung,
(ii) Applizieren der vermischten Zusammensetzung auf ein Substrat innerhalb der Topfzeit,
gefolgt von der Aushärtung der vermischten Zusammensetzung.

Auf die vollständig oder teilweise ausgehärtete Zusammensetzung kann eine weitere Beschichtung appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung.

Weiterhin besonders bevorzugt wird die Epoxidharz-Zusammensetzung als Klebstoff verwendet. Typischerweise weist die Epoxidharz-Zusammensetzung bei der Verwendung als Klebstoff nach dem Vermischen der Komponenten eine pastöse Konsistenz mit strukturviskosen Eigenschaften auf. Bei der Applikation wird der vermischte Klebstoff innerhalb der Topfzeit auf mindestens eines der zu verklebenden Substrate aufgetragen und die beiden Substrate innerhalb der Offenzeit des Klebstoffs zu einer Verklebung gefügt.

Der vermischte Klebstoff wird insbesondere mittels Pinsel, Rolle, Spatel, Rakel, Kelle, oder aus einer Tube, Kartusche oder Dosiervorrichtung appliziert bzw. aufgetragen.

Der Klebstoff ist besonders geeignet für Verwendungen in der Bauindustrie, insbesondere für die Armierung von Bauwerken mittels Stahllamellen oder Lamellen aus Kohlefaser-verstärkten Composite-Kunststoffen (CFK), für Konstruktionen, welche geklebte Beton-Fertigteile enthalten, insbesondere Brücken oder Betontürme für beispielsweise Windkraftanlagen, Schächte, Rohrleitungen oder Tunnels, oder für Konstruktionen, welche geklebte Natursteine, keramische Elemente oder Teile aus Faserzement, Stahl, Gusseisen, Aluminium, Holz oder Polyester enthalten, für die Verankerung von Dübeln oder Stahlstäben in Bohrlöchern, für die Fixierung von beispielsweise Geländern, Brüstungen oder Türrahmen, für Reparaturen wie insbesondere die Verfüllung von Kanten, Löchern oder Fugen bei der Betoninstandsetzung, oder für das Aufkleben von Folien aus Polyvinylchlorid (PVC), flexibilisiertem Polyolefin (Combiflex^{®}) oder haftungsmodifiziertem chlorsulfoniertem Polyethylen (Hypalon^{®}) auf Beton oder Stahl.

Weitere Einsatzgebiete betreffen das strukturelle Kleben in der Bau- oder Fertigungsindustrie, insbesondere als Klebemörtel, Montageklebstoff, Armierungsklebstoff wie insbesondere für das Verkleben von Lamellen aus CFK oder Stahl auf Beton, Mauerwerk oder Holz, als Element-Klebstoff für beispielsweise Brückenelemente, Sandwichelementklebstoff, Fassadenelementklebstoff, Verstärkungsklebstoff, Karrosserieklebstoff oder Halbschalenklebstoff für Rotorblätter von Windturbinen.

Ebenfalls geeignet ist ein solcher Epoxidharz-Klebstoff für das Verfüllen von Hohlräumen wie Rissen, Spalten oder Bohrlöchern, wobei der Klebstoff in den Hohlraum gefüllt oder injiziert wird und nach der Aushärtung diesen ausfüllt und die Flanken des Hohlraums kraftschlüssig miteinander verbindet bzw. verklebt.

Dabei wird die Epoxidharz-Zusammensetzung insbesondere in einem Verfahren zum Verkleben eingesetzt, umfassend die Schritte
(i) Vermischen der Komponenten der Epoxidharz-Zusammensetzung,
(ii) Applizieren der vermischten Zusammensetzung innerhalb der Topfzeit,
   - entweder auf mindestens eines der zu verklebenden Substrate und Fügen der Substrate zu einer Verklebung innerhalb der Offenzeit,
   - oder in einen Hohlraum oder Spalt zwischen mehreren Substraten und gegebenenfalls Einfügen eines Ankers in den Hohlraum oder Spalt innerhalb der Offenzeit,
gefolgt von der Aushärtung der vermischten Zusammensetzung.

Als "Anker" wird dabei insbesondere ein Armierungseisen, ein Gewindestab oder ein Bolzen bezeichnet. Ein solcher wird insbesondere so in einer Mauer, Wand, Decke oder in einem Fundament eingeklebt bzw. verankert, dass ein Teil davon kraftschlüssig verklebt ist und ein Teil davon vorsteht und konstruktiv belastet werden kann.

Verklebt werden können gleichartige oder verschiedene Substrate.

Aus der Applikation und Aushärtung der Epoxidharz-Zusammensetzung wird ein Artikel erhalten.

Ein weiterer Gegenstand der Erfindung ist somit ein Artikel, erhalten aus der Verwendung der Epoxidharz-Zusammensetzung.

Der Artikel ist bevorzugt ein Bauwerk oder ein Teil davon, insbesondere ein Bauwerk des Hoch- oder Tiefbaus, ein Büro, eine Industriehalle, eine Turnhalle, ein Kühlraum, ein Silo, eine Brücke, ein Dach, ein Treppenhaus, ein Fussboden, ein Balkon, eine Terrasse oder ein Parkdeck, oder ein industrielles Gut oder ein Konsumgut, insbesondere ein Pier, eine Offshore-Plattform, ein Schleusentor, ein Kran, eine Spundwand, eine Rohrleitung oder ein Rotorblatt einer Windkraftanlage, oder ein Transportmittel wie insbesondere ein Automobil, ein Lastkraftwagen, ein Schienenfahrzeug, ein Schiff, ein Flugzeug oder ein Helikopter, oder ein Anbauteil davon.

Die Epoxidharz-Zusammensetzung zeichnet sich durch vorteilhafte Eigenschaften aus. Sie ist auch mit wenig oder ganz ohne Verdünner formulierbar und dabei überraschend niedrigviskos und sehr gut verarbeitbar und härtet zuverlässig und überraschend schnell aus, insbesondere auch bei feuchtkalten Bedingungen. Dabei entstehen mechanisch hochwertige Beschichtungen mit hoher Oberflächenqualität. Solche Epoxidharz-Produkte sind besonders geeignet als Beschichtungen, insbesondere für Böden.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Beschreibung der Messmethoden:

Die **Viskosität** wurde auf einem thermostatisierten Kegel-Platten-Viskosimeter Rheotec RC30 (Kegeldurchmesser 50 mm, Kegelwinkel 1°, Kegelspitze-PlattenAbstand 0.05 mm, Scherrate 10 s⁻¹) gemessen.

Die **Aminzahl** wurde durch Titration bestimmt (mit 0.1N HClO₄ in Essigsäure gegen Kristallviolett).

Flüssigchromatografie **(UHPLC)** wurde für die quantitative Bestimmung von N-Benzyl-1,2-ethandiamin nach Derivatisierung mit Phenylisocyanat gegen externe Kalibration durchgeführt.

Gelpermeationschromatografie **(GPC)** wurde für die Bestimmung der Gewichtsverhältnisse zwischen 2:1-Addukt, 3:2 Addukt und > 3:2 Addukt gegen Polystyrol als Standard durchgeführt.

### Verwendete Substanzen und Abkürzungen:

| | |
|---|---|
| Araldite^{®} GY 250: | Bisphenol A-Diglycidylether, EEW 187 g/Eq (von Huntsman) |
| Araldite^{®} DY-E: | Monoglycidylether von C₁₂- bis C₁₄-Alkoholen, EEW ca. 290 g/Eq (von Huntsman) |
| B-EDA-mix | Amingemisch enthaltend ca. 85 Gewichts-% N-Benzyl-1,2-ethandiamin und ca. 14 Gewichts-% N,N'-Dibenzyl-1,2-ethan-diamin, hergestellt wie nachfolgend beschrieben, AHEW 55 g/Eq |
| B-EDA-pure | gereinigtes N-Benzyl-1,2-ethandiamin, hergestellt wie nachfolgend beschrieben, 150.2 g/mol, AHEW 50 g/Eq |
| DB-EDA | N, N'-Dibenzyl-1,2-ethandiamin, 240.4 g/mol, AHEW 120.2 g/Eq (von Sigma Aldrich) |
| IPDA | 3-Aminomethyl-3,5,5-trimethylcyclohexylamin, AHEW42.6 g/Eq (Vestamin^{®} IPD, von Evonik) |

### Herstellung von Diaminen der Formel (I) und (II):

### Amingemisch enthaltend N-Benzyl-1,2-ethandiamin und N,N'-Dibenzyl-1,2-ethandiamin (B-EDA-mix):

In einem Rundkolben wurden 180.3 g (3 mol) 1,2-Ethandiamin unter Stickstoffatmosphäre bei Raumtemperatur vorgelegt. Unter gutem Rühren wurde langsam eine Lösung aus 106.1 g (1 mol) Benzaldehyd in 1200 ml Isopropanol dazugetropft und 2 Stunden nachgerührt. Die Reaktionsmischung wurde anschliessend bei einem Wasserstoff-Druck von 80 bar, einer Temperatur von 80°C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die hydrierte Lösung am Rotationsverdampfer bei 65 °C eingeengt, wobei unreagiertes 1,2-Ethandiamin, Wasser und Isopropanol entfernt wurden. Die so erhaltene Reaktionsmischung war eine klare, leicht gelbliche Flüssigkeit mit einer Aminzahl von 678 mg KOH/g und einem mittels GC bestimmten Gehalt an N-Benzyl-1,2-ethandiamin von ca. 85 Gewichts-% (Retentionszeit 8.47 - 8.57 min) und N,N'-Dibenzyl-1,2-ethandiamin von ca. 14 Gewichts-% (Retentionszeit 14.27 min). Dies entspricht einem Gewichtsverhältnis zwischen N-Benzyl-1,2-ethandiamin und N,N'-Dibenzyl-1,2-ethandiamin von 86/14.

### N-Benzyl-1,2-ethandiamin (gereinigt, B-EDA-pure):

50 g des wie beschrieben hergestellten Amingemisches enthaltend N-Benzyl-1,2-ethandiamin und N,N'-Dibenzyl-1,2-ethandiamin (B-EDA-mix) wurden bei 80°C unter Vakuum destilliert, wobei 31.3 g Destillat (N-Benzyl-1,2-ethandiamin) bei einer Dampftemperatur von 60 bis 65°C und 0.06 mbar aufgefangen wurden. Erhalten wurde eine farblose Flüssigkeit mit einer Viskosität von 8 mPa s bei 20°C, einer Aminzahl von 750 mg KOH/g und einer mittels GC bestimmten Reinheit von > 97%.

### Herstellung von Addukten:

### Addukt A1: (erfindungsgemässes Beispiel)

53.0 g des Amingemisches B-EDA-mix (enthaltend 0.3 mol N-Benzyl-1,2-ethandiamin und 0.03 mol N,N'-Dibenzyl-1,2-ethandiamin), hergestellt wie vorgängig beschrieben, wurden unter Stickstoffatmosphäre vorgelegt und auf 80 °C erwärmt. Unter gutem Rühren wurden langsam 36.8 g (0.2 mol Epoxidgruppen) Araldite^{®} GY 250 zugegeben, wobei die Temperatur der Reaktionsmischung durch Kühlung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 74 Pa s und einem berechneten AHEW von 117 g/Eq erhalten.

Das Addukt **A1** enthielt gemäss UHPLC 27.8 Gewichts-% N-Benzyl-1,2-ethandiamin und gemäss GPC Addukt-Moleküle im Gewichts-Verhältnis 2:1 Addukte / 3:2 Addukte / > 3:2 Addukte = 46.5 / 27.2 /26.3.

### Addukt A2: (erfindungsgemässes Beispiel)

45.0 g (0.3 mol) gereinigtes N-Benzyl-1,2-ethandiamin (B-EDA-pure), hergestellt wie vorgängig beschrieben, und 11.3 g (0.05 mol) N,N'-Dibenzyl-1,2-ethandiamin (DB-EDA), wurden unter Stickstoffatmosphäre vorgelegt, vermischt und auf 80 °C erwärmt. Unter gutem Rühren wurden langsam 36.8 g (0.2 mol Epoxidgruppen) Araldite^{®} GY 250 zugegeben, wobei die Temperatur der Reaktionsmischung durch Kühlung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 47 Pa s und einem berechneten AHEW von 117.3 g/Eq erhalten.

### Addukt A3: (erfindungsgemässes Beispiel)

45.0 g (0.3 mol) gereinigtes N-Benzyl-1,2-ethandiamin (B-EDA-pure), hergestellt wie vorgängig beschrieben, und 19.3 g (0.08 mol) N,N'-Dibenzyl-1,2-ethandiamin (DB-EDA), wurden unter Stickstoffatmosphäre vorgelegt, vermischt und auf 80 °C erwärmt. Unter gutem Rühren wurden langsam 36.8 g (0.2 mol Epoxidgruppen) Araldite^{®} GY 250 zugegeben, wobei die Temperatur der Reaktionsmischung durch Kühlung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 19 Pa s und einem berechneten AHEW von 117.5 g/Eq erhalten.

### Addukt A4: (Vergleichsbeispiel)

45.0 g (0.3 mol) gereinigtes N-Benzyl-1,2-ethandiamin (B-EDA-pure), hergestellt wie vorgängig beschrieben, wurden unter Stickstoffatmosphäre vorgelegt und auf 80 °C erwärmt. Unter gutem Rühren wurden langsam 36.8 g (0.2 mol Epoxidgruppen) Araldite^{®} GY 250 zugegeben, wobei die Temperatur der Reaktionsmischung durch Kühlung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 262 Pa s und einem berechneten AHEW von 116.3 g/Eq erhalten.

Das Addukt **A4** enthielt gemäss UHPLC 24.2 Gewichts-% N-Benzyl-1,2-ethandiamin und gemäss GPC Addukt-Moleküle im Gewichts-Verhältnis 2:1 Addukte / 3:2 Addukte / > 3:2 Addukte = 42.5 / 27.0 /30.5.

### Herstellung von Härtern und Epoxidharz-Zusammensetzungen:

### Beispiele 1 bis 12:

Für jedes Beispiel wurden die in den Tabellen 1 bis 3 angegebenen Inhaltsstoffe der Harz-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt.

Ebenso wurden die in den Tabellen 1 bis 3 angegebenen Inhaltsstoffe der Härter-Komponente verarbeitet und aufbewahrt.

Anschliessend wurden die beiden Komponenten jeder Zusammensetzung mittels des Zentrifugalmischers zu einer homogenen Flüssigkeit verarbeitet und diese unverzüglich folgendermassen geprüft:
10 Minuten nach dem Vermischen wurde die Viskosität bei 20°C gemessen **("Viskosität (10')").**

Die **Gelierzeit** wurde im Normklima bestimmt, indem die vermischte Zusammensetzung (25 g) mittels eines Spatels von Zeit zu Zeit bewegt wurde, bis sie zu gelieren begann.

Für die Bestimmung der **Shore D-Härte** nach DIN 53505 wurden je zwei zylindrische Prüfkörper (Durchmesser 20 mm, Dicke 5 mm) hergestellt. Einer wurde im Normklima gelagert und die Härte nach 1 Tag und nach 2 Tagen gemessen (1d NK) bzw. (2d NK), der andere wurde bei 8°C und 80% relativer Feuchtigkeit gelagert und die Härte nach 1 Tag und nach 2 Tagen im kalten Zustand gemessen (1d 8°/80%) bzw. (2d 8°/80%).

Ein erster Film wurde in einer Schichtdicke von 500 µm auf eine Glasplatte aufgezogen und dieser im Normklima gelagert bzw. ausgehärtet. An diesem Film wurde die **Königshärte** (Pendelhärte nach König, gemessen nach DIN EN ISO 1522) nach 1 Tag ("Königshärte (1d NK)"), nach 2 Tagen ("Königshärte (2d NK)"), nach 4 Tagen ("Königshärte (4d NK)"), nach 7 Tagen ("Königshärte (7d NK)") und nach 14 Tagen ("Königshärte (14d NK)") bestimmt. Falls Werte von mehr als 200 s erreicht waren, wurde die Königshärte nicht erneut bestimmt. Nach 14 Tagen wurde der Aspekt des Films beurteilt (in der Tabelle mit "**Aspekt (NK)**" bezeichnet). Als "schön" wurde ein Film bezeichnet, welcher eine glänzende und nichtklebrige Oberfläche ohne Struktur aufwies. Als "Struktur" wird dabei jegliche Art von Zeichnung oder Muster auf der Oberfläche bezeichnet.

Ein zweiter Film wurde in einer Schichtdicke von 500 µm auf eine Glasplatte aufgezogen und dieser unmittelbar nach dem Applizieren während 7 Tagen bei 8°C und 80% relativer Feuchtigkeit und anschliessend während 2 Wochen im Normklima gelagert, beziehungsweise ausgehärtet. 24 Stunden nach der Applikation wurde ein Flaschendeckel aus Polypropylen auf den Film aufgesetzt, unter welchem ein feuchter Schwamm platziert war. Nach weiteren 24 Stunden wurden der Schwamm und der Deckel entfernt und an einer neuen Stelle des Films platziert, wo sie nach 24 Stunden wieder entfernt und neu platziert wurden, insgesamt 4 mal. Anschliessend wurde der Aspekt dieses Films beurteilt (in den Tabellen mit "**Aspekt (8°/80%)**" bezeichnet), auf die gleiche Weise wie für den Aspekt (NK) beschrieben. Dabei wurde jeweils auch die Anzahl und Art der sichtbaren Marken angegeben, die im Film durch den feuchten Schwamm oder den aufgesetzten Deckel entstanden waren. Als "**Blushing**" wurde die Anzahl weiss verfärbte Flecken angegeben. Als "(1)" wurde ein schwacher, weiss verfärbter Fleck bezeichnet. Als "**Ring**" wurde angegeben, ob ein ringförmiger Abdruck durch Einsinken des ersten, 24h nach Applikation aufgesetzten Deckels vorhanden war. Ein solcher ringförmiger Abdruck zeigt an, dass die Beschichtung noch nicht begehbar ist. An den so ausgehärteten Filmen wurde wiederum die Königshärte bestimmt, jeweils nach 7 Tagen bei 8°C und 80% relativer Feuchtigkeit ("Königshärte (7d 8°/80%)"), dann nach weiteren 2 Tagen im NK ("Königshärte (+2d NK)") bzw. 7 Tagen im NK ("Königshärte (+7d NK)") bzw. 14d im NK ("Königshärte (+14d NK)"). Falls Werte von mehr als 190 s erreicht waren, wurde die Königshärte nicht erneut bestimmt.

Als Mass für die Vergilbung wurde weiterhin die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet **(Q-Sun (72h)).** Anschliessend wurde der Farbunterschied ΔE des so belasteten Films im Vergleich zum entsprechenden nicht belasteten Film mittels eines Colorimeters NH310 von Shenzen 3NH Technology Co. LTD, ausgerüstet mit Silicon Photoelectric Diode Detector, Light Source A, Color Space Measurement Interface CIE L*a*b*C*H*, bestimmt. ΔE-Werte bis 5 stehen für eine leichte Vergilbung.

Die Resultate sind in den Tabellen 1 bis 3 angegeben.

Die mit "(Ref.)" bezeichneten Beispiele sind Vergleichsbeispiele.

**Tabelle 1: Zusammensetzung und Eigenschaften der Beispiele 1 bis 4.**

| **Beispiel** | | | **1** | **2** | **3** | **4 (Ref.)** |
|---|---|---|---|---|---|---|
| **Harz-Komponente:** | | | | | | |
| | Araldite^{®} GY 250: | | 167.2 | 167.2 | 167.2 | 167.2 |
| | Araldite^{®} DY-E: | | 31.8 | 31.8 | 31.8 | 31.8 |

| **Härter-Komponente:** | | | | | | |
|---|---|---|---|---|---|---|
| | Addukt **A1** | | 117.0 | - | - | - |
| | Addukt **A2** | | - | 117.3 | - | - |
| | Addukt **A3** | | - | - | 117.5 | - |
| | Addukt **A4** | | - | - | - | 116.3 |
| Viskosität (10') [Pa·s] | | | 7.8 | 7.6 | 5.4 | 13.3 |
| Gelierzeit (h:min) | | | 3:15 | 3:15 | 3:30 | 2:50 |
| Shore D | | (1d NK) | 75 | 74 | 77 | 78 |
| | | (2d NK) | 76 | 79 | 77 | 78 |
| Shore D | | (1d 8°/80%) | 72 | 60 | 60 | 73 |
| | | (2d 8°/80%) | 78 | 78 | 74 | 79 |
| Königshärte [s] | | (1d NK) | 174 | 176 | 161 | 182 |
| | | (2d NK) | 203 | 200 | 190 | 207 |
| | | (7d NK) | | | 209 | |
| Aspekt (NK) | | | schön | schön | schön | schön |
| Q-Sun (72h) ΔE | | | 2.9 | n.b. | n.b. | 3.1 |
| Königshärte [s] | | (7d 8°/80%) | 95 | 88 | 71 | 97 |
| | | (+2d NK) | 192 | 190 | 185 | 195 |
| Aspekt (8°/80%) | | | schön | schön | schön | schön |
| Blushing | | | (1) | (1) | 0 | (1) |
| Ring | | | kein | kein | kein | kein |

| | | | | | | |
|---|---|---|---|---|---|---|
| "n.b." steht für "nicht bestimmt" | | | | | | |

**Tabelle 2: Zusammensetzung und Eigenschaften der Beispiele 5 bis 8.**

| **Beispiel** | | | **5** | **6** | **7** | **8 (Ref.)** |
|---|---|---|---|---|---|---|
| **Harz-Komponente:** | | | | | | |
| | Araldite^{®} GY 250: | | 167.2 | 167.2 | 167.2 | 167.2 |
| | Araldite^{®} DY-E: | | 31.8 | 31.8 | 31.8 | 31.8 |

| **Härter-Komponente:** | | | | | | |
|---|---|---|---|---|---|---|
| | | Addukt **A1** | 64.4 | - | - | - |
| | | Addukt **A2** | - | 64.5 | - | |
| | | Addukt **A3** | - | | 64.6 | |
| | | Addukt **A4** | - | - | - | 64.0 |
| | | B-EDA-pure | 22.6 | 22.6 | 22.6 | 22.6 |
| Viskosität (10') [Pa·s] | | | 1.59 | 1.54 | 1.38 | 2.20 |
| Gelierzeit (h:min) | | | 3:30 | 3:45 | 4:05 | 3:25 |
| Shore D | | (1d NK) | 78 | 78 | 77 | 78 |
| | | (2d NK) | 79 | 80 | 77 | 78 |
| Shore D | | (1d8°/80%) | 65 | 60 | 60 | 64 |
| | | (2d 8°/80%) | 78 | 78 | 65 | 77 |
| Königshärte [s] | | (1d NK) | 154 | 158 | 147 | 165 |
| | | (2d NK) | 189 | 183 | 185 | 195 |
| | | (7d NK) | 206 | 205 | 203 | 206 |
| Aspekt (NK) | | | schön | schön | schön | schön |
| Q-Sun (72h) ΔE | | | 3.5 | n.b. | n.b. | 3.6 |
| Königshärte [s] | | (7d 8°/80%) | 87 | 70 | 64 | 98 |
| | | (+2d NK) | 162 | 172 | 172 | 179 |
| | | (+7d NK) | 178 | 193 | 186 | 196 |
| | | (+14d NK) | 193 | 203 | 195 | 201 |
| Aspekt (8°/80%) | | | schön | schön | schön | schön |
| Blushing | | | (1) | 0 | 0 | (1) |
| Ring | | | kein | kein | kein | kein |

| | | | | | | |
|---|---|---|---|---|---|---|
| "n.b." steht für "nicht bestimmt" | | | | | | |

**Tabelle 3: Zusammensetzung und Eigenschaften der Beispiele 9 bis 12.**

| **Beispiel** | | | **9** | **10** | **11** | **12 (Ref.)** |
|---|---|---|---|---|---|---|
| **Harz-Komponente:** | | | | | | |
| | Araldite^{®} GY 250: | | 167.2 | 167.2 | 167.2 | 167.2 |
| | Araldite^{®} DY-E: | | 31.8 | 31.8 | 31.8 | 31.8 |

| **Härter-Komponente:** | | | | | | |
|---|---|---|---|---|---|---|
| | Addukt **A1** | | 58.5 | - | - | - |
| | Addukt **A2** | | - | 58.7 | - | - |
| | Addukt **A3** | | - | - | 58.8 | - |
| | Addukt **A4** | | - | - | - | 58.2 |
| | IPDA | | 21.3 | 21.3 | 21.3 | 21.3 |
| | Benzylalkohol | | 20.0 | 20.0 | 20.0 | 20.0 |
| Viskosität (10') [Pa·s] | | | 2.00 | 1.65 | 1.57 | 2.41 |
| Gelierzeit (h:min) | | | 3:25 | 3:40 | 4:00 | 3:15 |
| Shore D | | (1d NK) | 68 | 74 | 68 | 70 |
| | | (2d NK) | 74 | 76 | 72 | 73 |
| Shore D | | (1d 8°/80%) | 39 | 40 | 21 | 41 |
| | | (2d 8°/80%) | 72 | 72 | 59 | 73 |
| Königshärte [s] | | (1d NK) | 55 | 62 | 56 | 57 |
| | | (2d NK) | 102 | 104 | 92 | 104 |
| | | (7d NK) | 162 | 156 | 123 | 164 |
| | | (14d NK) | 168 | 167 | 168 | 174 |
| Aspekt (NK) | | | schön | schön | schön | schön |
| Q-Sun (72h) ΔE | | | 3.5 | n.b. | n.b. | 2.9 |
| Königshärte [s] | | (7d 8°/80%) | 41 | 34 | 31 | 48 |
| | | (+2d NK) | 123 | 115 | 108 | 132 |
| | | (+7d NK) | 161 | 154 | 146 | 155 |
| | | (+14d NK) | 164 | 174 | 168 | 168 |
| Aspekt (8°/80%) | | | schön | schön | schön | schön |
| Blushing | | | (1) | (1) | (1) | (1) |
| Ring | | | kein | ja | ja | kein |

| | | | | | | |
|---|---|---|---|---|---|---|
| "n.b." steht für "nicht bestimmt" | | | | | | |

## Patentansprüche

1. Aminfunktionelles Addukt aus der Umsetzung von
(i) einem Amingemisch enthaltend mindestens ein Diamin der Formel (I) und mindestens ein Diamin der Formel (II) in einem Gewichtsverhältnis im Bereich von 65/35 bis 95/5, 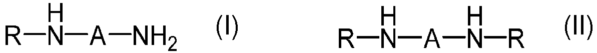 wobei
A für einen Alkylenrest, Cycloalkylenrest oder Arylalkylenrest mit 2 bis 12 C-Atomen steht, und
R für einen Alkylrest, Cycloalkylrest oder Arylalkylrest mit 1 bis 12 C-Atomen steht,
wobei die beiden Stickstoffatome im Diamin der Formel (I) und (II) jeweils durch mindestens zwei C-Atome voneinander getrennt sind und das Diamin der Formel (I) insgesamt 8 bis 15 C-Atome aufweist,
(ii) mit mindestens einem Diepoxid
in einem stöchiometrischen Verhältnis von mindestens 1.2 mol Diamin der Formel (I) auf 1 Mol-Equivalent Epoxidgruppen.

2. Addukt gemäss Anspruch 1, **dadurch gekennzeichnet, dass** das für die Herstellung des Addukts eingesetzte Amingemisch einen Gehalt an Diamin der Formel H₂N-A-NH₂ von höchstens 5 Gewichts-%, bevorzugt höchstens 3 Gewichts-%, besonders bevorzugt höchstens 2 Gewichts-%, insbesondere höchstens 1 Gewichts-%, enthält.

3. Addukt gemäss einem der Ansprüche 1 oder 2, **dadurch gekennzeichnet, dass** die Reste A und R in den Diaminen der Formeln (I) und (II) für identische Reste stehen.

4. Addukt gemäss einem der Ansprüche 1 bis 3, **dadurch gekennzeichnet, dass** das Diamin der Formel (I) für N-Benzyl-1,2-ethandiamin und das Diamin der Formel (II) für N,N'-Dibenzyl-1,2-ethandiamin steht.

5. Addukt gemäss einem der Ansprüche 1 bis 4, **dadurch gekennzeichnet, dass** das Gewichtsverhältnis zwischen dem Diamin der Formel (I) und dem Diamin der Formel (II) im Bereich von 70/30 bis 95/5, bevorzugt 80/20 bis 90/10, liegt.

6. Addukt gemäss einem der Ansprüche 1 bis 5, **dadurch gekennzeichnet, dass** das Amingemisch ein Reaktionsprodukt aus der reduktiven Alkylierung von mindestens einem Amin der Formel H₂N-A-NH₂ mit mindestens einem Aldehyd oder Keton und Wasserstoff ist.

7. Addukt gemäss einem der Ansprüche 1 bis 6, **dadurch gekennzeichnet, dass** das Diepoxid ein aromatisches Diepoxid ist.

8. Addukt gemäss einem der Ansprüche 1 bis 7, **dadurch gekennzeichnet, dass** das stöchiometrische Verhältnis im Bereich von 1.3 bis 2, insbesondere 1.4 bis 1.7, mol Diamin der Formel (I) auf 1 Mol-Equivalent Epoxidgruppen des Diepoxids liegt.

9. Addukt gemäss Anspruch 8, **dadurch gekennzeichnet, dass** es 2:1 Addukte und höhere Addukte in einem Gewichtsverhältnis im Bereich von 30/70 bis 80/20 enthält.

10. Addukt gemäss einem der Ansprüche 1 bis 9, **dadurch gekennzeichnet, dass** es weniger als 1 Gewichts-% Verdünner oder Wasser enthält.

11. Härter für Epoxidharze umfassend das Addukt gemäss einem der Ansprüche 1 bis 10 und mindestens einen weiteren Bestandteil ausgewählt aus der Gruppe bestehend aus weiteren Aminen, Beschleunigern und Verdünnern.

12. Härter für Epoxidharze gemäss Anspruch 11, **dadurch gekennzeichnet, dass** mindestens ein weiteres Amin mit aliphatischen Aminogruppen und mindestens drei Aminwasserstoffen enthalten ist, welches bei der Herstellung des Adduktes nicht zugegen war.

13. Härter für Epoxidharze gemäss einem der Ansprüche 11 bis 12, **dadurch gekennzeichnet, dass** das weitere Amin ausgewählt ist aus der Gruppe bestehend aus N-Benzyl-1,2-ethandiamin, 2,2(4),4-Trimethyl-1,6-hexandiamin, 1,2-Diaminocyclohexan, 1,3-Bis(aminomethyl)cyclohexan, 1,4-Bis(aminomethyl)-cyclohexan, 1-Amino-3-aminomethyl-3,5,5-trimethylcyclohexan, 2(4)-Methyl-1,3-diaminocyclohexan, 1,3-Bis(aminomethyl)benzol, Polyoxypropylendiaminen mit einem mittlerem Molekulargewicht Mₙ im Bereich von 200 bis 500 g/mol und Polyoxypropylentriaminen mit einem mittlerem Molekulargewicht Mₙ im Bereich von 300 bis 500 g/mol enthalten ist.

14. Epoxidharz-Zusammensetzung umfassend
- eine Harz-Komponente enthaltend mindestens ein Epoxidharz und
- eine Härter-Komponente enthaltend das Addukt gemäss einem der Ansprüche 1 bis 9 oder den Härter gemäss einem der Ansprüche 11 bis 13.

15. Verwendung der Epoxidharz-Zusammensetzung gemäss Anspruch 14 als Beschichtung, Primer, Klebstoff, Dichtstoff, Vergussmasse, Giessharz, Imprägnierharz oder als Matrix für Faserverbundwerkstoffe.

16. Artikel erhalten aus der Verwendung gemäss Anspruch 15.

## Claims

1. Amine-functional adduct from the reaction of
(i) an amine mixture comprising at least one diamine of formula (I) and at least one diamine of formula (II) in a weight ratio within a range from 65/35 to 95/5, where 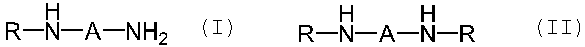
A is an alkylene radical, cycloalkylene radical or arylalkylene radical having 2 to 12 carbon atoms, and
R is an alkyl radical, cycloalkyl radical or arylalkyl radical having 1 to 12 carbon atoms,
wherein the two nitrogen atoms in the diamine of formula (I) and (II) are in each case separated from one another by at least two carbon atoms and the diamine of formula (I) has a total of 8 to 15 carbon atoms,
(ii) with at least one diepoxide
in a stoichiometric ratio of at least 1.2 moles of diamine of formula (I) to 1 mole equivalent of epoxy groups.

2. Adduct according to Claim 1, **characterized in that** the amine mixture used for production of the adduct has a content of diamine of formula H₂N-A-NH₂ of not more than 5% by weight, preferably not more than 3% by weight, more preferably not more than 2% by weight, in particular not more than 1% by weight.

3. Adduct according to either of Claims 1 or 2, **characterized in that** the radicals A and R in the diamines of formulas (I) and (II) are identical radicals.

4. Adduct according to any of Claims 1 to 3, **characterized in that** the diamine of formula (I) is N-benzylethane-1,2-diamine and the diamine of formula (II) is N,N'-dibenzylethane-1,2-diamine.

5. Adduct according to any of Claims 1 to 4, **characterized in that** the weight ratio between the diamine of formula (I) and the diamine of formula (II) is within a range from 70/30 to 95/5, preferably 80/20 to 90/10.

6. Adduct according to any of Claims 1 to 5, **characterized in that** the amine mixture is a reaction product from the reductive alkylation of at least one amine of formula H₂N-A-NH₂ with at least one aldehyde or ketone and hydrogen.

7. Adduct according to any of Claims 1 to 6, **characterized in that** the diepoxide is an aromatic diepoxide.

8. Adduct according to any of Claims 1 to 7, **characterized in that** the stoichiometric ratio is within a range from 1.3 to 2, in particular 1.4 to 1.7, moles of diamine of formula (I) to 1 molar equivalent of epoxy groups of the diepoxide.

9. Adduct according to Claim 8, **characterized in that** it contains 2:1 adducts and higher adducts in a weight ratio within a range from 30/70 to 80/20.

10. Adduct according to any of Claims 1 to 9, **characterized in that** it contains less than 1% by weight of thinner or water.

11. Curing agent for epoxy resins comprising the adduct according to any of Claims 1 to 10 and at least one further constituent selected from the group consisting of further amines, accelerators, and thinners.

12. Curing agent for epoxy resins according to Claim 11, **characterized in that** at least one further amine having aliphatic amino groups and at least three amine hydrogens is present that was not present during the preparation of the adduct.

13. Curing agent for epoxy resins according to either of Claims 11 or 12, **characterized in that** the further amine is selected from the group consisting of N-benzylethane-1,2-diamine, 2,2(4),4-trimethylhexane-1,6-diamine, 1,2-diaminocyclohexane, 1,3-bis(aminomethyl)cyclohexane, 1,4-bis(aminomethyl)cyclohexane, 1-amino-3-aminomethyl-3,5,5-trimethylcyclohexane, 2(4)-methyl-1,3-diaminocyclohexane, 1,3-bis(aminomethyl)benzene, polyoxypropylene diamines having an average molecular weight Mₙ within a range from 200 to 500 g/mol, and polyoxypropylene triamines having an average molecular weight Mₙ within a range from 300 to 500 g/mol is present.

14. Epoxy resin composition comprising
- a resin component comprising at least one epoxy resin and
- a curing agent component comprising the adduct according to any of Claims 1 to 9 or the curing agent according to any of Claims 11 to 13.

15. Use of the epoxy resin composition according to Claim 14 as coating, primer, adhesive, sealant, potting compound, casting resin, impregnating resin or as matrix for fiber composites.

16. Article obtained from the use according to Claim 15.

## Revendications

1. Produit d'addition à fonctionnalité amino, provenant de la transformation de
(i) un mélange d'amines contenant au moins une diamine de formule (I) et au moins une diamine de formule (II) dans un rapport pondéral dans la plage de 65/35 à 95/5, 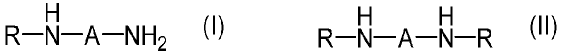 dans lesquelles
A représente un radical alkylène, cycloalkylène ou arylalkylène comprenant 2 à 12 atomes de carbone et
R représente un radical alkyle, cycloalkyle ou arylalkyle comprenant 1 à 12 atomes de carbone,
les deux atomes d'azote dans la diamine des formules (I) et (II) étant à chaque fois séparés l'un de l'autre par au moins deux atomes de C et la diamine de formule (I) présentant au total 8 à 15 atomes de carbone,
(ii) avec au moins un diépoxyde
dans un rapport stoechiométrique d'au moins 1,2 mole de diamine de formule (I) pour 1 équivalent en mole de groupes époxyde.

2. Produit d'addition selon la revendication 1, **caractérisé en ce que** le mélange d'amines utilisé pour la préparation du produit d'addition contient une teneur en diamine de formule H₂N-A-NH₂ d'au plus 5% en poids, de préférence d'au plus 3% en poids, de manière particulièrement préférée d'au plus 2% en poids, en particulier d'au plus 1% en poids.

3. Produit d'addition selon l'une des revendications 1 ou 2, **caractérisé en ce que** les radicaux A et R dans les diamines des formules (I) et (II) représentent des radicaux identiques.

4. Produit d'addition selon l'une des revendications 1 à 3, **caractérisé en ce que** la diamine de formule (I) est la N-benzyl-1,2-éthanediamine et la diamine de formule (II) est la N,N'-dibenzyl-1,2-éthanediamine.

5. Produit d'addition selon l'une des revendications 1 à 4, **caractérisé en ce que** le rapport pondéral entre la diamine de formule (I) et la diamine de formule (II) se situe dans la plage de 70/30 à 95/5, de préférence de 80/20 à 90/10.

6. Produit d'addition selon l'une des revendications 1 à 5, **caractérisé en ce que** le mélange d'amines est un produit de réaction de l'alkylation par réduction d'au moins une amine de formule H₂N-A-NH₂ avec au moins un aldéhyde ou cétone et de l'hydrogène.

7. Produit d'addition selon l'une des revendications 1 à 6, **caractérisé en ce que** le diépoxyde est un diépoxyde aromatique.

8. Produit d'addition selon l'une des revendications 1 à 7, **caractérisé en ce que** le rapport stoechiométrique se situe dans la plage de 1,3 à 2, en particulier de 1,4 à 1,7 mole de diamine de formule (I) pour 1 équivalent en mole de groupes époxyde du diépoxyde.

9. Produit d'addition selon la revendication 8, **caractérisé en ce qu'**il contient des produits d'addition 2:1 et des produits d'addition supérieurs dans un rapport pondéral dans la plage de 30/70 à 80/20.

10. Produit d'addition selon l'une des revendications 1 à 9, **caractérisé en ce qu'**il contient moins de 1% en poids de diluant ou d'eau.

11. Durcisseur pour des résines époxyde comprenant le produit d'addition selon l'une des revendications 1 à 10 et au moins un autre constituant choisi dans le groupe constitué par d'autres amines, les accélérateurs et les diluants.

12. Durcisseur pour des résines époxyde selon la revendication 11, **caractérisé en ce qu'**il contient au moins une autre amine, présentant des groupes amino aliphatique et au moins trois hydrogènes d'amine, qui n'était pas présente lors de la préparation du produit d'addition.

13. Durcisseur pour des résines époxyde selon l'une des revendications 11 à 12, **caractérisé en ce que** l'autre amine est choisie dans le groupe constitué par la N-benzyl-1,2-éthanediamine, la 2,2(4),4-triméthyl-1,6-hexanediamine, le 1,2-diaminocyclohexane, le 1,3-bis(aminométhyl)cyclohexane, le 1,4-bis(aminométhyl)-cyclohexane, le 1-amino-3-aminométhyl-3,5,5-triméthylcyclohexane, le 2(4)-méthyl-1,3-diaminocyclohexane, le 1,3-bis(aminométhyl)benzène, les polyoxypropylènediamines présentant un poids moléculaire moyen Mₙ dans la plage de 200 à 500 g/mole et les polyoxypropylènetriamines présentant un poids moléculaire moyen Mₙ dans la plage de 300 à 500 g/mole est contenu.

14. Composition de résine époxyde comprenant
- un composant de résine, contenant au moins une résine époxyde et
- un composant durcisseur, contenant le produit d'addition selon l'une des revendications 1 à 9 ou le durcisseur selon l'une des revendications 11 à 13.

15. Utilisation de la composition de résine époxyde selon la revendication 14 comme revêtement, apprêt, adhésif, matériau d'étanchéité, masse de coulée, résine de coulée, résine d'imprégnation ou comme matrice pour des matériaux composites fibreux.

16. Article obtenu par l'utilisation selon la revendication 15.
